# EUROPÄISCHE PATENTSCHRIFT

(11) **EP 4 043 859 B1**
(45) Veröffentlichungstag und Bekanntmachung des Hinweises auf die Patenterteilung: **25.09.2024**
(21) Anmeldenummer: 22158670.4
(22) Anmeldetag: 03.11.2015
(51) Int. Cl.: G01N 3/46, G01N 3/50

(54) **TEST- UND/ODER PRÜFVORRICHTUNG**
TEST AND/OR EXAMINATION APPARATUS
DISPOSITIF DE TEST ET/OU D'ESSAI

(30) Priorität: 07.11.2014 DE 102014016482
(43) Veröffentlichungstag der Anmeldung: 17.08.2022
(62) Teilanmeldung aus: 15828732.6
(73) Patentinhaber: Weinhold, Wolfgang P., 97070 Würzburg (DE)
(72) Erfinder: Weinhold, Wolfgang P., 97070 Würzburg (DE)
(74) Vertreter: Riechelmann & Carlsohn Patentanwälte PartG mbB

(56) Entgegenhaltungen:
- DE-A1- 102006 012 374
- DE-A1- 102012 206 886
- US-A- 3 974 678
- US-A- 5 689 058
- US-A1- 2006 174 699
- US-A1- 2009 078 035

## Beschreibung

Die vorliegende Erfindung betrifft eine Prüfvorrichtung, insbesondere zum Test und/oder zur Feststellung der Beständigkeit von Oberflächen oder Objekten gegen Abrieb oder Stoßempfindlichkeit oder auf Kratzfestigkeit.

Derartige Prüfvorrichtungen werden eingesetzt, um verschiedene Belastungen von Objekten bezüglich Beaufschlagungen durch ein anderes Objekt untersuchen und bewerten zu können. In vielen Bereichen ist das zu prüfende Objekt dahingehend zu untersuchen oder zu bewerten, wie sich dieses auf Berührung durch einen beliebigen anderen Körper z. B. Nutzung und/oder Bedienungen mit den Fingern oder der Hand verhält und nach wie vielen Nutz- und/oder Kontaktgängen, wie beispielsweise Bedienvorgängen, sich welche Abnutzungserscheinungen, wie Abrasion, einstellen.

In der Automobilindustrie sind beispielsweise Tests von Bedienelementen, Armaturen, wie Schaltgriffen, Polster, Verkleidungen oder von Lackoberflächen wie Kofferraumdeckel, Hauben oder Türgriffen vorzunehmen, welche mit den Händen, Fingern oder Fingernägeln, aber auch anderen Gegenständen, wie Taschen, Kleidung oder auch Schlüssel, berührt und/oder bedient werden. Bekannte Testgeräte testen derartige Oberflächen auf unterschiedliche Weise und sind als Schlag-, Stoß-, Abrieb- oder Kratztester ausgeführt.

In der EP 2 679 979 A1 ist ein Kratztester für Glasscheiben offenbart, welcher mittels einer Feder eine einjustierbare Kraft auf einen Zylinder ausübt, der wiederum einen daran befestigten Diamanten gegen die Glasscheibe drückt. Die so aufgebaute Mechanik wird mittels an ihr angeordneten Gleitschienen auf korrespondierenden, auf der Glasscheibe aufgebrachten Schienen über die Glasscheibe gezogen und ein Kratzer auf dieser erzeugt. Anhand der Kraft, die von oben auf den Schiebebock ausgeübt wird, um die Gleitschienen zur Auflage auf der Glasscheibe zu bringen, wenn der Schiebebock über die Glasfläche bewegt wird, erhält man einen Test- und/oder Prüfwert der Kratzfestigkeit.

Eine Vorrichtung zur Prüfung der Kratzfestigkeit von Oberflächen wird auch in der WO 2004/038385 A1 vorgestellt. Hier wird die Kratzfestigkeit eines Probekörpers mittels eines mit Feststoffpartikeln versetzten Gasstroms getestet. Der gebildete Verlauf der Gasströmung ist dabei mit einer Dosiervorrichtung ausgerüstet, mittels welcher eine definierte Menge von Partikeln in einen festgelegten Gasstrom eingebracht werden kann, welche auf das Prüfobjekt einwirken.

Eine weitere Kratzvorrichtung bzw. Testvorrichtung für die Beständigkeit einer Probe wird in der DE 10 2006 012 374 A1 beschrieben, mit welcher eine Materialprobe, welche auf einem verfahrbaren Tisch angeordnet ist, durch einen Belastungskörper beaufschlagt wird, der mit einem Gewicht in Richtung der Probenhalterung gedrückt wird. Die Probenhalterung wird daraufhin, bei einjustierbarem Gewicht, mit einem vordefinierten Bewegungsablauf in der (x, y)-Ebene verfahren. Das sich einstellende Ergebnis der Materialprobe gibt Aufschluss über die Beständigkeit der Materialprobe gegen die aufgebrachte Belastung. Auch allgemein bekannt ist der sogenannte 3-Körper-Verschleiß bzw. der zugehörige Test, bei welchem zwei in Bewegung gehaltene Körper mit dazwischen eingebrachtem Sand aneinander gerieben werden, um Aufschluss über die Abriebfestigkeit und/oder Reibeigenschaften zu erhalten. Durch die Wahl eines anderen Mediums als Sand, wie beispielsweise weichere oder härtere Materialien oder Feststoff/Flüssigkeitsgemische, lassen sich unterschiedliche Bedingungen einstellen.

Bekannt ist auch eine Vorrichtung zur Ermittlung der Abriebfestigkeit unter der Bezeichnung "Linear Abraser". Hier wird ein Prüfkörper, der in seiner Höhenposition einstellbar ist und mit Gewichten belastbar ist, über ein zu prüfendes Objekt gefahren, womit Aussagen der Beständigkeit des Prüfmaterials gegenüber der Hin- und Her-Bewegung über das Prüfmaterial getroffen werden können. Der Antrieb erfolgt hier über einen üblichen Elektromotor, welcher über ein Getriebe ein Gestänge antreibt, welches sich im Anschluss annähernd linear auf und ab oder besser gesagt vor und zurück bewegt und an welchem das Prüfmittel angebracht ist. Der Elektromotor sowie die Bedien-, Steuer- und Anzeigevorrichtung, wie auch das Getriebe und das Gestänge, sind dabei untrennbar miteinander als Einheit verbunden.

Die bekannten Prüfvorrichtungen verwenden in der Regel entweder einen, von wenigstens einem Elektromotor angetriebenen, beweglichen Tisch, auf welchem das zu prüfende Objekt aufgelegt wird. Ein Prüfobj ekt wird dann auf das zu prüfende Objekt mit einer vorgegebenen Kraft positioniert, und der Tisch, auf welchem das zu prüfende Objekt positioniert ist, wird bewegt. Die andere bekannte Vorrichtung treibt mittels eines Elektromotors über ein Getriebe ein Gestänge, an welchem das Prüfobjekt in der Höhe fixiert befestigt ist.

In allen bekannten Varianten ist die Vorrichtung als komplette Einheit ausgebildet, und der Antrieb entweder des zu prüfenden Objektes oder des Prüfobjektes ist durch einen Elektromotor realisiert. Insbesondere bei der Variante der über ein Getriebe angetriebenen Schubstange, die in ihrer Höhe zusätzlich festgelegt ist und außerhalb der Vorrichtung nicht weiter geführt ist, erkennt man relativ ungenaue Bewegungsabläufe.

Nachteilig ist weiter, dass die Bewegungen in den bekannten Ausführungen nur mit geringer Dynamik sowie geringer Energiedichte erfolgen.

Für die Beurteilung der Beständigkeit von verschiedenen zu prüfenden Objekten, wie beispielsweise teilelastischen Materialien mit viskoelastischen Eigenschaften, sind diese Betrachtungen aber sehr wichtig.

Aus US 2006/174699 A1 ist eine Vorrichtung zur Prüfung einer Oberfläche bekannt. Die Vorrichtung weist einen Zylinder auf, der mittels Stützen abgestützt ist. Der Zylinder weist eine Stange auf, die mit einem Gleitmodul verbunden ist, das von Schienen getragen wird.

Aufgabe der vorliegenden Erfindung ist es daher, eine Prüfvorrichtung zur Untersuchung von Objekten zu schaffen, welche die genannten Nachteile reduziert oder vermeidet. Insbesondere ist die Aufgabe der Erfindung, eine große Anzahl von Objekten an unterschiedlichen Standorten oder speziell direkt am Ort der Verwendung und unter vielen unterschiedlichen Bedingungen testen zu können. Hierunter fallen für Objekte des täglichen Lebens auch die Betrachtungen der Nutzung und/oder Bedienung, beispielsweise mit der Hand, was sehr langsam erfolgt und dadurch vorgegebenen unterschiedlichen Kontakt zu dem zu prüfenden Objekt, wie beispielsweise trockene oder nasse Hände oder unter Berücksichtigung von verschiedenen Zusatzkomponenten wie Reinigungsmittel, Pflegeprodukte oder ähnlichen Stoffen. Es sollen aber auch nahezu alle anderen Bedingungen und Berührung von Objekten mit sehr unterschiedlichen, mit diesen in Kontakt tretenden Elementen untersucht werden können. Insbesondere sind auch sehr hoch dynamische Vorgänge, wie beispielsweise Vibrationen, mit der erfindungsgemäßen Prüfvorrichtung untersuch- und/oder prüfbar. Hierunter fallen beispielsweise auch entstehende Abriebe, Kratzer oder andere Beschädigungen durch beispielsweise harte Gegenstände auf Oberflächen während auftretender Vibrationen.

Auch ist die Berücksichtigung von äußeren, beispielsweise klimatischen Bedingungen sehr wichtig, was aufgrund der vorgegebenen starren Architektur bestehender Testgeräte sehr schwierig ist.

Diese Aufgabe wird mit den Merkmalen des kennzeichnenden Teils des Anspruchs 1 gelöst. Fortbildungen und vorteilhafte Ausführungen der Erfindung sind in den weiteren Ansprüchen umfasst.

Die Erfindung ist im beigefügten Anspruchssatz beschrieben.

Erfindungsgemäß ist eine Prüfvorrichtung, insbesondere zum Test und/oder zur Feststellung der Beständigkeit von Oberflächen oder Objekten gegen Abrieb oder Stoßempfindlichkeit oder auf Kratzfestigkeit, vorgesehen, bestehend aus einer adaptiven Haltevorrichtung oder einer Zugangsvorrichtung auf das zu prüfende Objekt oder eine zu prüfende Oberfläche, wenigstens einem Mittel zur Anbringung eines Prüf-Wirkobjektes vor oder über dem zu prüfenden Objekt, einer Vorrichtung zum Bewegen des auf das zu prüfende Objekt treffenden Prüf-Wirkobjektes sowie einer Steuer- und Kontrollvorrichtung zur Steuerung und Kontrolle der Geschwindigkeit und der Kraft, mit welcher das Prüf-Wirkobjekt mit dem zu prüfenden Objekt in Kontakt tritt, wobei die Prüfvorrichtung für die Bewegung des Prüf-Wirkobjektes auf dem zu prüfenden Objekt mit einer Tragvorrichtung für das Prüf-Wirkobjekt ausgeführt ist, welche mit einem Zusatzgewicht belastbar ist und mit einem, mit einem Fluid betätigten Kraftzylinder oder Druckluftzylinder mit einer verdrehsicher ausgeführten, nicht runden Schub- und Zugstange ausgerüstet ist, welcher über die Steuer- und Kontrollvorrichtung angesteuert oder mit einer solchen verbindbar ist und an seinem Ende in einer Befestigung drehbar oder wenigstens neigbar angebracht ist.

In einer bevorzugten Ausgestaltung der erfindungsgemäßen Prüfvorrichtung ist der Druckluftzylinder, welcher mit einer nicht runden Schub- und Zugstange ausgerüstet ist, drehbar oder zumindest neigbar an seinem geschlossenen Ende direkt oder mittels einer Aufnahmevorrichtung an einer Haltevorrichtung angeordnet. Die Position, an welcher der Druckluftzylinder an die Haltevorrichtung angebracht ist, bestimmt die Basiskraft bzw. das Gewicht, welches am Ende der Schub- und Zugstange bei bestimmter Auslenkung herrscht.

Die Haltevorrichtung erlaubt dabei bevorzugt die Höhenverstellung des aufgenommenen Endes des Druckluftzylinders, um auf unterschiedliche Höhen von Prüfobj ekten reagieren zu können, alternativ können Halterungen in unterschiedlichen Längen verwendet sein, um eine Anpassung der Höhe des Druckluftzylinders mit der Höhe des zu prüfenden Objektes zu erreichen, oder eben diesen zunächst in eine waagrechte Position bringen zu können. Zur Erleichterung dieser Einstellung verfügt der Druckluftzylinder und/oder die Aufnahmevorrichtung für diesen über ein Nivellierung-Anzeigegerät, wie etwa eine kleine Wasserwaage oder eine integrierte und/oder angebaute Libelle.

Die von dem Druckluftzylinder abgehende Schub- und Zugstange ist an ihrem Ende mit einer Tragvorrichtung für das Prüf-Wirkobjekt ausgerüstet, wobei die Tragvorrichtung bevorzugt drehbar ausgeführt ist, um beispielsweise unterschiedliche Winkel des Kontaktes zwischen dem Prüf-Wirkobjekt bezüglich des zu prüfenden Objektes einstellen zu können.

Das Prüf-Wirkobjekt ist in einer Ausführung am Ende einer Stange oder eines Stabes angeordnet, welche durch die Tragvorrichtung an der Schub- und Zugstange geführt ist und an dieser fixierbar, z. B. mittels einer Sicherungsschraube, ist. Auf der Tragevorrichtung oder entlang der Stange oder des Stabes, an dessen einem Ende das Prüf-Wirkobj ekt angebracht ist, lassen sich Zusatzgewichte anordnen, um die Kraft, mit der das Prüf-Wirkobjekt auf das zu prüfende Objekt trifft, einzustellen.

Die so ausgeführte Prüfvorrichtung erlaubt die Belastung des zu prüfenden Objektes mit dem definierbaren Gewicht des wippenden Teils, des in der Halterung angeordneten Druckluftzylinders, der Tragevorrichtung mit dem Prüf-Wirkobjekt sowie des zusätzlich eingestellten Gewichts durch Zusatzgewichte. Durch die gewählte Ausführung einer nicht runden Schub- und Zugstange und optional zusätzlich eines nicht runden Druckluftzylinders ist die einmal eingestellte Position des Prüf-Wirkobjektes in Bezug auf das zu prüfende Objekt sehr verdrehsicher ausgeführt, und die Schub- und Zugstange muss nicht zusätzlich geführt werden. Auch erlaubt die so ausgestaltete Vorrichtung, dass das Prüf-Wirkobjekt der Kontur und/oder Unebenheiten des zu prüfenden Objektes folgen kann, da der Druckluftzylinder an seinem Ende drehbar gelagert ist.

Somit können auch nicht plane Objekte und/oder Oberflächen sehr gut getestet, geprüft oder untersucht werden.

Der Druckluftzylinder ist mit einer Steuer- und Kontrollvorrichtung sowie einer Druckluftversorgung verbunden oder verbindbar und erlaubt eine sehr hohe Dynamik sowie hohe Kräfte bezüglich der Bewegung und Geschwindigkeit, mit welcher die Schub- und Zugstange das Prüf-Wirkobjekt über das zu prüfende Objekt bewegt. Mittels der Steuerung lassen sich auch unterschiedliche, in einem weiten Bereich variable Geschwindigkeiten für jede Bewegung einstellen, womit beispielsweise Objekte mit einer Vorzugsrichtung und/oder Objekte auf bestimmte Bewegungsrichtungen besser und präziser getestet und bewertet werden können. In einer weiteren bevorzugten Ausführung der Erfindung ist der Kraft- oder Druckluftzylinder noch mit einem, mit der Steuer- und Kontrolleinrichtung verbundenen, Druckmesser und/oder Positions- und/oder Weg-Messsystem ausgerüstet oder mit diesem verbunden, womit die eingebrachte Kraft und/oder der Weg messbar ist und beispielsweise sehr einfach in einem Kraft-Weg-Diagramm zur Verfügung steht. Auch ist in einer weiteren Ausführung die Prüfvorrichtung mit einer Kraftmessvorrichtung, wie beispielsweise einer Kraftmessdose unterhalb des zu prüfenden Objektes ausgerüstet, womit beispielsweise Stick-Slip-Effekte wie Haft- und/oder Ruckgleiteffekte von gegeneinander bewegten Festkörpern z. B. knarzende Türen oder ratternde Scheibenwischer untersuchbar und/oder bewertbar sind. Mit der erfindungsgemäßen Prüfvorrichtung und den anpassbaren Parametern der Bewegung der Prüfobjekte, der Steuerung und/oder Kontrolle und Messung, sowie der Zugabe von unterschiedlichsten Testfluiden lassen sich nahezu alle tribologischen Oberflächeneigenschaften eines Prüfobj ektes testen und/oder ermitteln. Darüber hinaus können mit der erfindungsgemäßen Prüfvorrichtung die verschiedensten Reibmessungen angestellt werden und beispielsweise Schmiermittel und/oder Öle getestet, geprüft und bewertet werden, um beispielsweise Reibkoeffizienten zu ermitteln.

In einer bevorzugten Ausführung der erfindungsgemäßen Prüfvorrichtung ist diese auf einer Grundplatte mit einer Haltevorrichtung für das zu prüfende Objekt sowie einer Haltevorrichtung für den dreh- und/oder neigbar befestigten Druckluftzylinder ausgeführt. Auf der Grundplatte können weitere Halte- und/oder Antriebselemente für den Druckluftzylinder vorgesehen sein, um diesen beispielsweise in einer festzulegenden Neigung fixieren zu können oder um diesen an einer Stelle anzuheben und wieder abzusenken.

Die Haltevorrichtung für das zu prüfende Objekt ist in einer Ausführung der Prüfvorrichtung schwenkbar, insbesondere um 90° schwenk- bzw. kippbar, womit die Bewegung des Prüf-Wirkobjektes auf dem zu prüfenden Objekt wahlweise lotrecht oder senkrecht zur Schwerkraft erfolgen kann. In einer weiteren bevorzugten Ausführung der Prüfvorrichtung ist vor dem zu prüfenden Objekt und zwischen diesem und dem auf dieses wirkende Prüf-Wirkobjekt ein bahnartiges Material angeordnet. Dieses bahnartige Material ist bevorzugt ein Gewebe und/oder Textil, welches während der Prüfung zusätzlich mit einer Testflüssigkeit beaufschlagt wird. Durch entsprechende Auswahl des Materials des bahnartigen Mediums sowie Auswahl der Testflüssigkeit lassen sich sehr unterschiedliche Parameter für die Prüfung erreichen oder nachbilden. Beispielsweise kann durch entsprechende Rauheit die Oberfläche von Händen oder speziellen Handschuhen simuliert werden und getestet und/oder überprüft und/oder festgestellt werden, wie oft das prüfende Objekt unter diesen Bedingungen mit welcher Belastung durch das Prüf-Wirkobjekt belastbar ist. Durch Zugabe von entsprechenden Flüssigkeiten und/oder Lotionen und/oder anderen Zusätzen kann beispielsweise getestet und/oder überprüft und/oder festgestellt werden, wie sich die zu prüfenden Objekte bei gleichzeitigem Kontakt mit z. B. Waschmitteln, Reinigern, anderen Chemikalien oder Stoffen verhalten. Durch die zahlreichen Einstell-, Justier- und Anpassungsoptionen der Prüfvorrichtung können so sehr lebensnahe Situationen und/oder Situationen des täglichen Lebens unter allen erdenkbaren äußeren Bedingungen nachgebildet werden und sehr aussagekräftige und verlässliche Erkenntnisse ermittelt werden. Mit der erfindungsgemäßen Prüfvorrichtung lassen sich beispielsweise Bedienungsvorgänge an einem Schalter, einer Tastatur oder einem anderen Bedienelement mit der Hand oder einem Finger durch eine Person simulieren. Durch die Auswahl der Härte des Prüf-Wirkobjektes sowie des bahnartigen, vorgespannten Materials und/oder der zusätzlich verwendeten Testflüssigkeit kann beispielsweise auch der Kontakt mit den Fingern, der Hand oder anderen Oberflächen oder Körpern nach Zugabe einer Reinigungsflüssigkeit oder eines anderen Fluids, einer Creme oder einer Chemikalie getestet werden.

Zur Ermittlung von Ergebnissen oder Messwerten über die erreichbare Belastung und/oder Belastungsgrenzen und/oder zur Überprüfung unter extremeren äußeren Bedingungen wird die Prüfvorrichtung in einer weiteren Variante teilweise in einer Klimakammer angeordnet. Hierbei ist bevorzugt die Steuer-, Kontroll- und Anzeigeeinrichtung von den übrigen Komponenten der Prüfvorrichtung getrennt, außerhalb der Klimakammer angeordnet, um elektrische und/oder elektronische Komponenten zu schützen und/oder deren Funktion aufrecht zu erhalten. Der Druckluftzylinder ist in dieser Variante bedarfsmäßig mit einer lokal wirkenden Isolierung und/oder einer Heizeinrichtung wie beispielsweise einer aufgebrachten Heizfolie ausgerüstet, welche über die Steuer- und Kontrolleinrichtung angesteuert wird, welche außerhalb der Klimakammer angeordnet ist. Damit lassen sich beispielsweise Tests und/oder Prüfungen bei Temperaturen von bis zu minus 40° oder darunter durchführen. Für die Berücksichtigung der Temperatur, unter welchen der Test und/oder die Prüfung abläuft, besitzt die Prüfvorrichtung nahe am zu prüfenden Objekt einen Temperatursensor, welcher die Werte an die Steuer- und Kontrolleinrichtung überträgt. Die Druckluftzuführungen für den Druckluftzylinder, welche von der Druckluftversorgung und/oder der Steuer- und Kontrolleinrichtung außerhalb der Klimakammer zugeleitet werden, sind bevorzugt isoliert oder mit einer Begleitheizung ausgeführt.

Der Kopf des Prüf-Wirkobjektes ist in Form, Größe und Härte variierbar und bevorzugt wechselbar ausgeführt. Bevorzugt können verschiedene Halterungen angebaut werden, um auch ganz spezielle Gegenstände als Prüf-Wirkobjekte einsetzen zu können, wie z. B. einen Schlüssel, welcher mit dem Lack am Türgriff oder einer Textilfläche oder einer anderen Oberfläche in Kontakt tritt. Für Anwendungen in einer Klimakammer bei etwa minus 40° hat sich beispielsweise ein Kopf mit einer Shorehärte im Bereich von 40 bis 50 als bevorzugte Variante gezeigt. Für andere Anwendungen ist der Kopf mit einem textilen und/oder saugfähigen Material überzogen oder aus solch einem ausgebildet.

In einer Ausführungsform der erfindungsgemäßen Prüfvorrichtung ist vorgesehen, dass der Kopf des Prüf-Wirkobjektes mit einem wenigstens teilweise saugfähigen Material ausgerüstet und/oder überzogen ist.

In einer Ausführungsform der erfindungsgemäßen Prüfvorrichtung ist vorgesehen, dass der Druckluft- oder Kraft-betätigte Zylinder verdrehsicher oder in einer definierten Position fixierbar ausgeführt ist.

In einer Ausführungsform der erfindungsgemäßen Prüfvorrichtung ist vorgesehen, dass der Druckluft-betätigte Zylinder mit wenigstens einem direkt an diesem angebrachten Temperatursensor ausgerüstet ist, welcher mit der Steuer- und Kontrollvorrichtung verbindbar ist.

In einer Ausführungsform der erfindungsgemäßen Prüfvorrichtung ist vorgesehen, dass die Prüfvorrichtung über wenigstens einen Temperatursensor im Bereich des zu prüfenden Objekts verfügt.

In einer Ausführungsform der erfindungsgemäßen Prüfvorrichtung ist vorgesehen, dass das Prüf-Wirkobjekt und/oder der Prüfkörper während der Prüfung mittels einer Zufuhreinrichtung mit einem definierten Fluid in vorgegebener Menge beaufschlagbar ist.

In einer Ausführungsform der erfindungsgemäßen Prüfvorrichtung ist vorgesehen, dass die Prüfvorrichtung als Kratztester oder als Abriebtestvorrichtung oder als Reib-, Schab-, Walg- oder Rolltester ausgeführt ist.

Im Folgenden wird die Erfindung anhand von Zeichnungen beispielhaft näher beschrieben, dabei zeigen:
- Fig. 1: eine perspektivische Darstellung einer Variante einer Prüfvorrichtung
- Fig. 2: eine Variante der Prüfvorrichtung aus Fig. 1 mit aufgestellter Haltevorrichtung
- Fig. 3: eine schematische Darstellung einer weiteren Variante einer Prüfvorrichtung mit einer Fluid-Beaufschlagungsvorrichtung
- Fig. 4: eine Variante der Prüfvorrichtung mit ausgeschwenkter Bewegungseinrichtung.

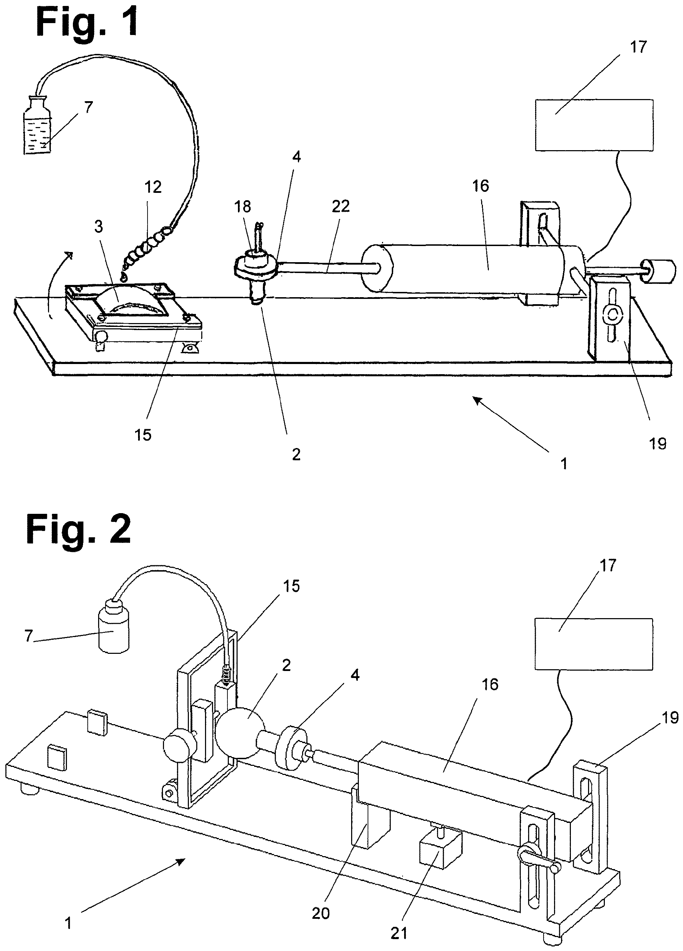

In der Fig. 1 ist eine erfindungsgemäße Prüfvorrichtung gezeigt, in welcher ein zu prüfendes Objekt 3 oder ein Teilstück eines Objektes in einer Haltevorrichtung 15 in einer definierbaren Höhe und einem Abstand zur Bewegungseinrichtung 16 anbringbar ist. Die Bewegungseinrichtung ist als Kraft- oder Druckluftzylinder 16 ausgeführt, welcher über eine nicht rund ausgeführte Schub- und Zugstange 22 und optional zusätzlich über einen nicht runden Zylinder 16 verfügt (in dieser Ansicht nicht detailliert dargestellt) und an seinem Ende in einer Befestigungsvorrichtung drehbar oder wenigstens neigbar angebracht ist. Diese Befestigung kann mittels Spannschrauben oder Riegel bedarfsgerecht fixierbar gegen Verdrehung ausgeführt sein. Durch die Ausgestaltung der Zug- und Schubstange 22 als nicht rundes Element und optional zusätzlich durch die Ausgestaltung des Kraft- oder Druckluftzylinders 16 als nicht runder Zylinder schafft diese Anordnung eine in sich verdrehsicher ausgeführte Bewegungsvorrichtung für das Prüf-Wirkobjekt 2 am Ende der Zug- und Schubstange 22. Die Zug- und Schubstange 22 muss gemäß dieser Ausführung nicht zusätzlich und aufwendig mechanisch geführt werden, um eine gleichbleibende Bewegung des Prüf-Wirkobjektes 2 mit der Tragevorrichtung 4 zu ermöglichen.

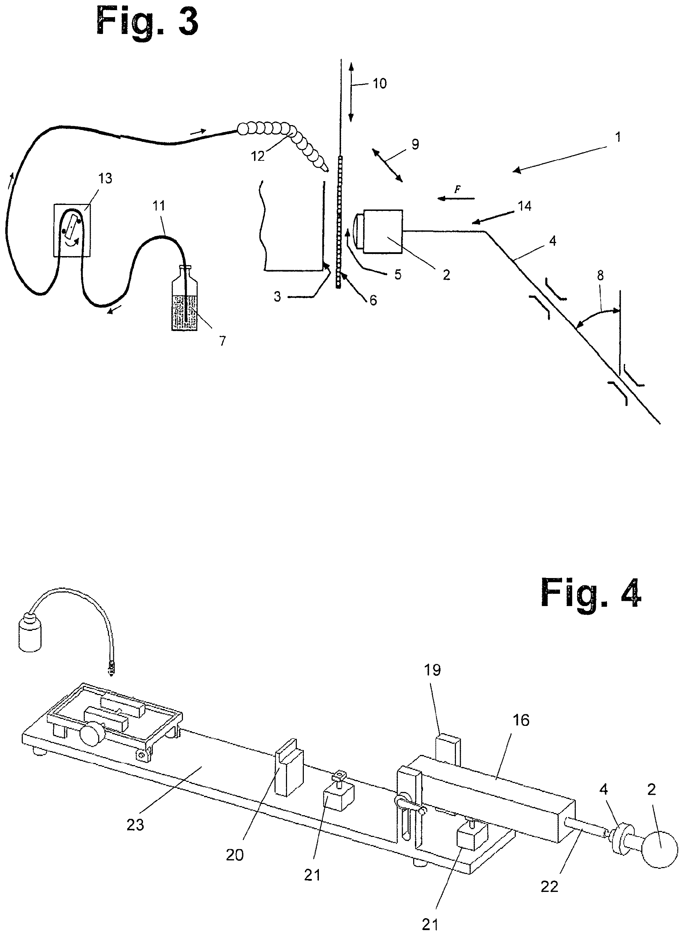

Weiterhin erlaubt die Ausführung der Prüfvorrichtung mit dem Zylinder 16, welcher an seinem hinteren Ende neigbar an den Halteelementen 19 angebracht ist, die Prüfung von nicht ebenen Prüfobjekten 3. Das am vorderen Ende der Zug- und Schubstange 22 angebrachte Prüf-Wirkobjekt 2 kann beim Aufliegen auf das zu prüfende Objekt 3 durch die drehbare Lagerung des Zylinders 16 an den Haltemitteln 19 bei Vor- und Zurück-Bewegung der Zug- und Schubstange einer Kontur, wie z. B. einer Wölbung folgen. Dies wäre mit einem fixierten Zylinder nicht möglich. Die Fixierung des Zylinders 16 kann aber für alternative Anwendung durchaus Sinn machen, wofür in einer alternativen Ausführung (Fig. 2 und Fig. 3) ein Fixier- oder Begrenzungsmittel 20 angeordnet ist.

Die Haltevorrichtung für das zu prüfende Objekt ist in dieser gezeigten Variante in Fig. 1 zusammen mit dem Druckluftzylinder 16 auf einer gemeinsamen Grundplatte angeordnet, was eine kompakte Prüfeinheit schafft, mit welcher wiederkehrende Test- und/oder Prüfabläufe komfortabel durchzuführen sind. Grundsätzlich kann die Bewegungsvorrichtung 16 mit ihren endseitigen Befestigungen 19 und ggf. mit einem Auflager 20 für den Zylinder an jeder gewünschten Stelle oder einem vorgegebenen Ort für einen Test- und/oder Prüfungsaufbau aufgebaut werden. Dies kann z. B. erforderlich sein, wenn ein Testobjekt an einem Ort fest installiert ist und auch direkt an diesem Ort der Test- und/oder Prüfungsablauf stattfinden muss. Hierfür können diverse Varianten für die Befestigungselemente 19 am Ende des Zylinders zum Einsatz kommen, wie beispielsweise massive Saugfüße, Magnetplatten oder Klebe- oder mechanische Verbindungsvorrichtungen.

Auch ist gemäß einer Ausführung eine Öffnung in der Grundplatte an der Stelle der Haltevorrichtung 15 vorgesehen, womit es möglich wird, die Grundplatte selbst über dem zu prüfenden Objekt zu positionieren. Der Prüfkörper wird dann derart ausgerichtet, dass dieser durch die Öffnung hindurch mit dem zu prüfenden Objekt und/oder einer zu prüfenden Fläche in Kontakt treten kann. Somit erhält man eine mobile Belastungseinheit auf der Grundplatte mit einem Durchbruch für die Kontaktherstellung zwischen dem Prüf-Wirkobj ekt und dem zu prüfenden Objekt.

In dem gezeigten Test- und/oder Prüfaufbau mit der erfindungsgemäßen Vorrichtung wie in Fig. 1 gezeigt, wird ein Objekt 3, welches in einer Linie oder besser gesagt parallel zum Druckluftzylinder 16 auf der gemeinsamen Grundplatte auf einer Haltevorrichtung 15 befestigt ist, von einem Prüf-Wirkobjektüberfahren, bzw. wird das Prüf-Wirkobjekt 2 über das zu prüfende Objekt mittels des Druckluftzylinders 16 geschoben und/oder gezogen.

Die Höhe des Prüf-Wirkobjektes 2 ist dabei an der Tragevorrichtung 4 am Ende der Schub- und Zugvorrichtung, welche in den Zylinder 16 führt, einstellbar, womit die Berührungsintensivität des Prüf-Wirkobjektes 2 auf das zu prüfende Objekt 3 variiert werden kann. Zusätzlich lassen sich an der Haltevorrichtung 4 für das Prüf-Wirkobjekt Zusatzgewichte 18 aufbringen, um unterschiedliche Wirkkräfte des Prüf-Wirkobjektes auf das zu prüfende Objekt einstellen zu können.

Die Steuer-, Regel- und Kontrollvorrichtung 17 ist bevorzugt getrennt von dem Druckluftzylinder der Haltevorrichtung für zu prüfende Objekte und der gemeinsamen Grundplatte ausgeführt, kann jedoch zur Schaffung einer sehr kompakten Prüfvorrichtung auch zusammen mit den genannten Komponenten auf der gemeinsamen Grundplatte aufgebaut und sowohl Druckluft- wie auch Elektrisch- fertig verbunden sein. Die Kontrolleinheit verfügt bevorzugt über Schnittstellen zur Übertragung der Daten zu anderen IT-Geräten und/oder Ausgabegeräten wie Druckern oder dergleichen. Die Übertragung erfolgt wahlweise mittels Kabelverbindung und/oder drahtlos, wofür entsprechende Schnittstellen wie LAN, WLAN, Bluetooth oder für andere Funkübertragungsverfahren vorgesehen sind.

Die getrennte Variante bietet insbesondere die Möglichkeit, Prüf- und/oder Testabläufe unter sehr widrigen Temperaturbedingungen z. B. in einer Kältekammer bei Temperaturen unter Minus 30 °C zu realisieren. Hierbei ist die kälteempfindliche Elektronik und insbesondere die Anzeigeeinheit außerhalb der Kältekammer positionierbar. In einer derartigen Ausführung sind die, mit absolut entfeuchteter Luft betriebenen Druckluftzuführungen sowie der Druckluftzylinder bevorzugt mit einer sehr platzierten und kontrollierbaren lokalen Heizung und/oder Isolierung ausgerüstet, beispielsweise kommen für den Druckluftzylinder und die Zuleitungen Heizfolien und/oder Rohrheizungen zur Anwendung. Die Prüfvorrichtung besitzt für einen derartigen Anwendungsfall bevorzugt wenigstens einen, mit der Kontroll- und/oder Steuereinrichtung verbundenen, Temperatursensor am oder nahe dem zu prüfenden Objekt, um festzuhalten und/oder festzulegen, bei welcher Temperatur die Prüfung und/oder der Test am Objekt erfolgt.

Mit der in Fig. 1 dargestellten Ausführung der erfindungsgemäßen Prüfvorrichtung lassen sich beispielsweise Kratz-, Reibe-, Schabe- oder ähnliche Berührungsvorgänge eines Objektes simulieren und die Widerstandsfähigkeit des zu prüfenden Objektes dahingehend ermitteln. Mittels der wählbaren Prüf-Wirkobjekte können so lebensnahe Situationen, wie z. B. die Berührung eines Objektes mit den Fingern oder mit Fingernägeln und deren Auswirkung auf die zu prüfenden Objekte nachgestellt und geprüft werden. Unterschiedliche Bedingungen lassen sich so durch die Auswahl geeigneter Köpfe des Wirk-Prüfobj ektes realistisch auswählen und die zu prüfenden Objekte sehr präzise auf deren Belastbarkeit unter den eingestellten Bedingungen überprüfen.

Tests und/oder Prüfungen auf Widerstandsfähigkeit von zu prüfenden Objekten sind dadurch sehr leicht für sehr unterschiedliche Bedingungen, wie z. B. Rauheit der auf das zu prüfende Objekt treffenden Objekte oder die Auswirkungen bei verschiedenen Umgebungstemperaturen, möglich.

Bei verschiedenen Prüfungen, insbesondere von visko-elastischen Objekten ist die erfindungsgemäße Ausführung mit Druckluftzylinder als Antrieb für das Prüf-Wirkobjekt geeignet, sehr große Geschwindigkeiten und somit Energiedichten auf das zu prüfende Objekt einwirken zu lassen. Hierbei spielt die Viskoelastizität der Objekte eine große Rolle, da diese bei Einwirkung relativ großer Kräfte, aber geringer Geschwindigkeiten wenig Beeinträchtigung erfahren, demgegenüber aber bei erhöhten Bewegungsgeschwindigkeiten sehr schnell Schaden nehmen. Dies hängt mit der Eigenart zusammen, dass die Zurückbildung des Objektes nach einer Belastung langsam erfolgt und bei großen Bewegungsgeschwindigkeiten des Prüf-Wirkobjektes auf das zu prüfende Objekt dieses sehr schnell Schaden erleidet, da die entstehenden Kräfte sich aufschaukeln.

Somit ist mit der erfindungsgemäßen Vorrichtung eine sehr präzise Messung einer Frequenz möglich, welche die Zerstörung des zu prüfenden Objektes zur Folge haben wird. Beispielsweise wird das Entlangfahren mit einem Fingernagel auf einer Lederoberfläche auch bei größerem Druck, aber langsamer Bewegung keinen nennenswerten Schaden hervorrufen. Dies ändert sich aber aufgrund der Viskoelastizität des Objektes z. B. Polsterung oder Leder selbst, sehr schnell, wenn die Bewegungsgeschwindigkeit, mit welcher das Entlangfahren geschieht, erhöht wird. Die Lederoberfläche wird dabei nach relativ kurzer Zeit beschädigt oder zerstört. Die in so einer erfindungsgemäßen Prüfvorrichtung ermittelten Werte geben schnell Aufschluss bei Fragen nach Einsetzbarkeit verschiedener Materialien und/oder Aufschluss über erfolgte Beschädigungen.

Die Prüfvorrichtung ist in einer weiteren Ausführung mit einer Beaufschlagungsvorrichtung 7, 12 ausgerüstet, mittels welcher während des Berührungs-, Streich- oder Angreif-Prozesses des Prüf-Wirkobjektes 2 auf das zu prüfende Objekt 3 ein Fluid 7 zugegeben werden kann, um verschiedene äußere Einflüsse zu simulieren. So können beispielsweise alle erdenklichen Kontakte zwischen Objekt und Prüfobjekt zusätzlich unter Verwendung einer Prüfflüssigkeit, wie z. B. Schweiß, Reinigungsmitteln, Arzneien oder anderen chemischen Produkten, überprüft und die Beständigkeit der zu prüfenden Objekte unter Berücksichtigung dieser Umstände getestet und/oder gemessen und/oder überprüft werden.

In einer weiteren Variante gemäß Fig. 2 ist das Prüf-Wirkobjekt 2, welches auf ein zu prüfendes Objekt trifft, in Fortführung der Schub- und Zugstange 22 des Zylinders 16 angeordnet. Durch Betätigung des Druckluftzylinders 16 wird das entsprechend den Prüf- und/oder Testkriterien vorgegebene Prüf-Wirkobjekt, welches an der Schub- und Zugstange 22 mittels einer Halterung 4 angebracht ist, gegen das zu prüfende Objekt bewegt und in Kontakt mit diesem gebracht. Hierbei kann mittels der Steuer- und Kontrollvorrichtung exakt vorgegeben werden, wie oft in welcher Zeit und mit welcher Kraft das Prüf-Wirkobjekt gegen das zu prüfende Objekt gefahren und/oder gestoßen werden soll. Dies könnte die Simulation eines Tast- und/oder Schaltvorgangs sein, in welchem die Beständigkeit eines Bedienelementes und/oder dessen Beschriftung und/oder dessen Aufdruck bezüglich Bedienvorgänge, sein.

Zur Erzielung eines möglichst realistischen Berührungsvorgangs auf ein Objekt 3 ist die Prüfvorrichtung in einer weiteren bevorzugten Ausführungsvariante, wie in Fig. 2 oder Fig. 4 gezeigt, mit wenigstens einer von der Steuer- und Kontrolleinheit 17 steuerbaren Hebevorrichtung 21 für den an den Befestigungsstellen 19 drehbar gelagerten Zylinder 16 ausgerüstet. Hierdurch wird vor dem Auftreffen des Prüf-Wirkobjektes 2 auf das zu prüfende Objekt 3 der Zylinder 16 im vorderen Bereich leicht angehoben und unmittelbar vor dem Auftreffen des Prüf-Wirkobjektes 2 auf das zu prüfende Objekt 3 wieder abgesenkt, dadurch wird eine sehr realistische, lebensnahe Streichbewegung beim Drücken auf das zu prüfende Objekt erreicht.

Auch in der Fig. 3 ist eine Prüfvorrichtung gezeigt, die eine solche entlangfahrende Drückbewegung auf das zu prüfende Objekt 3 bewirkt, wobei in dieser schematisch dargestellten Ausführung der Zylinder nicht mittels einer steuerbaren Hebevorrichtung angehoben wird. Es wird zur Erzeugung der genannten, nach unten gerichteten Streich- Drückbewegung eine mechanische Ausgestaltung verwendet und die Bewegung mittels einer winkelig 8 angeordneten Anlenkstange 4 und einer, mit einer Feder 14 versehenen Abkragung, an welcher das Prüf-Wirkobjekt 2 befestigt ist, erreicht.

Die genannten Varianten der erfindungsgemäßen Prüfvorrichtung sind oder lassen sich bedarfsmäßig mit einer Beaufschlagungsvorrichtung ausrüsten, mittels welcher während des Berührungs-, Streich- oder Angreif-Prozesses des Prüf-Wirkobj ektes 2 auf das zu prüfende Objekt 3 ein Fluid 7 zugegeben werden kann, um verschiedene äußere Einflüsse zu simulieren. Eine dahingehend automatisierte und kontinuierlich während des Prüf- und/oder Testvorgangs arbeitende Beaufschlagungsvorrichtung ist in Fig. 3 gezeigt. Dabei wird, beispielhaft gemäß Fig. 3 an der Prüfvorrichtung ein Bahn-artiges Material 6 zwischen dem zu prüfenden Objekt 3 und dem Prüf-Wirkobjekt 2 angeordnet, welches automatisiert und dosiert über eine Fördervorrichtung 13 ein Fluid 7 mittels einer positionierbaren Austrittsvorrichtung 12 an das Bahn-artige Material 6 abgibt.

In einer weiteren Ausführung der Prüfvorrichtung, wie sie in Fig. 4 zu sehen ist, kann der Zylinder 16 komplett geschwenkt werden, womit auch zu prüfende Objekte außerhalb der gemeinsamen Grundplatte 23 getestet werden können. Zur möglichen Simulation der von leicht oben erfolgenden Bewegung ist auch, wie hier gezeigt, auf der rechten Seite der Befestigungsvorrichtung 19 für den Zylinder eine weitere Hebevorrichtung 21 vorhanden, welche von der Steuer- und/oder Kontrolleinheit angesteuert wird. Damit lassen sich sehr einfach auch Objekte prüfen und/oder testen, welche nicht in die Haltevorrichtung 15 der Prüfvorrichtung eingebracht werden können.

Nachdem bevorzugte Ausführungen der Erfindung in Bezug auf die beiliegenden Zeichnungen beschrieben wurden, ist festzuhalten, dass die Erfindung nicht auf diese genauen Ausführungen beschränkt ist und dass verschiedene Änderungen und Modifizierungen daran von einem Fachmann ausgeführt werden können, ohne dass vom Umfang der Erfindung, wie er in den beiliegenden Ansprüchen definiert ist, abgewichen wird.

### Bezugszeichenliste

- 1: Prüfvorrichtung
- 2: Prüf-Wirkobjekt
- 3: Prüfobjekt, Prüfoberfläche
- 4: Tragvorrichtung
- 5: Bewegungskurve
- 6: Gewebe
- 7: Prüfflüssigkeit
- 8: Winkel
- 9: Bewegung des Prüf-Wirkobjektes
- 10: Bewegung des Gewebes
- 11: Förderleitung
- 12: Verstellbare Austrittsvorrichtung
- 13: Fördereinrichtung
- 14: Justierfeder
- 15: Haltevorrichtung für zu prüfendes Objekt
- 16: Vorrichtung zur Bewegung
- 17: Steuer-, Kontroll- und/oder Anzeigeeinrichtung
- 18: Zusatzgewicht
- 19: Befestigungsvorrichtung für Bewegungs-Zylinder
- 20: Auflager für Zylinder
- 21: Hebevorrichtung für Zylinder
- 22: Schub- und/oder Zugvorrichtung

## Patentansprüche

1. Prüfvorrichtung (1), insbesondere zum Test und/oder zur Feststellung der Beständigkeit von Oberflächen oder Objekten gegen Abrieb oder Stoßempfindlichkeit oder auf Kratzfestigkeit, bestehend aus einer adaptiven Haltevorrichtung (15) oder einer Zugangsvorrichtung auf das zu prüfende Objekt (3) oder eine zu prüfende Oberfläche, wenigstens einem Mittel zur Anbringung eines Prüf-Wirkobjektes (2) vor oder über dem zu prüfenden Objekt, einer Vorrichtung zum Bewegen (16) des auf das zu prüfende Objekt treffenden Prüf-Wirkobjektes sowie einer Steuer- und Kontrollvorrichtung (17) zur Steuerung und Kontrolle der Geschwindigkeit und der Kraft, mit welcher das Prüf-Wirkobjekt (2) mit dem zu prüfenden Objekt (3) in Kontakt tritt,
**dadurch gekennzeichnet,**
**dass** die Prüfvorrichtung (1) für die Bewegung des Prüf-Wirkobjektes (2) auf dem zu prüfenden Objekt (3) mit einer Tragvorrichtung (4) für das Prüf-Wirkobjekt ausgeführt ist, welche mit einem Zusatzgewicht (18) belastbar ist und mit einem, mit einem Fluid betätigten Kraftzylinder oder Druckluftzylinder (16) mit einer verdrehsicher ausgeführten, nicht runden Schub- und Zugstange (22) ausgerüstet ist, welcher über die Steuer- und Kontrollvorrichtung (17) angesteuert oder mit einer solchen verbindbar ist und an seinem Ende in einer Befestigung drehbar oder wenigstens neigbar angebracht ist.

2. Prüfvorrichtung nach Anspruch 1,
**dadurch gekennzeichnet,**
**dass** die Schub- und Zugstange (22) von dem Kraftzylinder oder Druckluftzylinder (16) abgeht und an ihrem Ende mit der Tragvorrichtung (4) ausgerüstet ist.

3. Prüfvorrichtung nach Anspruch 1,
**dadurch gekennzeichnet,**
**dass** die Bewegung des Prüf-Wirkobjektes (2) auf dem zu prüfenden Objekt (3) lotrecht oder waagrecht zur Schwerkraft erfolgt.

4. Prüfvorrichtung nach Anspruch 1,
**dadurch gekennzeichnet,**
**dass** das Prüf-Wirkobjekt als Prüfstempel (2) mit einem wechselbaren, wenigstens teilweise elastischen Kopf ausgeführt ist und zwischen diesem Prüfstempel und einer zu untersuchenden Oberfläche und/oder einem Objekt ein Bahn-artiges Material während der Prüfung angeordnet ist.

5. Prüfvorrichtung nach Anspruch 4,
**dadurch gekennzeichnet,**
**dass** das Bahn-artige Material wenigstens teilweise aus einem textilen Material ausgeführt ist und/oder eine definierte Größe an Rauheit aufweist.

6. Prüfvorrichtung nach Anspruch 1,
**dadurch gekennzeichnet,**
**dass** der Zylinder mit wenigstens einer Heizvorrichtung ausgerüstet ist.

7. Prüfvorrichtung nach Anspruch 1,
**dadurch gekennzeichnet,**
**dass** die Prüfvorrichtung mit räumlich voneinander trennbaren Einheiten der Bewegungsvorrichtung für das Prüf-Wirkobjekt und der Steuer- und/oder Kontrollvorrichtung ausgerüstet ist.

8. Prüfvorrichtung nach Anspruch 1, 4 und 5,
**dadurch gekennzeichnet,**
**dass** wenigstens die Einheit aus einer Haltevorrichtung für das zu prüfende Objekt, das Mittel zur Anbringung eines wenigstens teilweise textilen Materials sowie das Material selbst und die Vorrichtung zum Bewegen des Prüfstempels gegen das zu prüfende Material in einer Standardklimakammer unterbringbar ist.

9. Prüfvorrichtung nach einem oder mehreren der vorgenannten Ansprüche,
**dadurch gekennzeichnet,**
**dass** der gegen das zu prüfende Material bewegte Kopf des Prüf-Wirkobjekts über eine Shorehärte im Bereich von 40 bis 50 bei einer Temperatur von -40 °C verfügt.

10. Prüfvorrichtung nach einem oder mehreren der vorgenannten Ansprüche,
**dadurch gekennzeichnet,**
**dass** der für die Bewegung des Prüf-Wirkobj ektes ausgeführte Druckluft-betätigte Zylinder mittels einer Isolationsvorrichtung mit einem Gehäuse oder einer Haltevorrichtung verbunden oder an einem solchen Gehäuse oder einer Haltevorrichtung angebracht ist.

11. Prüfvorrichtung nach einem oder mehreren der vorgenannten Ansprüche,
**dadurch gekennzeichnet,**
**dass** die Verbindungsleitungen und/oder Verbindungen zwischen der Bewegungsvorrichtung für das Prüf-Wirkobj ekt und der Steuer- und/oder Kontrollvorrichtung isoliert und/oder teilweise beheizt ausgeführt sind.

12. Prüfvorrichtung nach Anspruch 1,
**dadurch gekennzeichnet,**
**dass** der Kopf des Prüf-Wirkobj ektes mit einem wenigstens teilweise textilen Material ausgerüstet und/oder überzogen ist.

## Claims

1. A testing device (1), in particular for testing and/or determining the resistance of surfaces or objects to abrasion or impact sensitivity or for scratch resistance, comprising an adaptive retaining device (15) or an access device to the object (3) to be inspected or a surface to be inspected, at least one means for attaching an active test object (2) in front of or above the object to be inspected, a device for moving (16) the active test object hitting the object to be inspected as well as a control and monitoring device (17) for controlling and monitoring the speed and the force at which the active test object (2) comes into contact with the object (3) to be inspected,
**characterized in that**
the testing device (1) is provided with a carrier device (4) for the active test object for moving the active test object (2) on the object (3) to be inspected which can be loaded with a additional weight (18) and is provided with a fluid-activated force cylinder or compressed-air cylinder (16) having a non-rotatably, non-round thrust and pull rod (22) which is driven via the control and monitoring device (17) or can be connected to such and at its end is rotatably or at least tiltably mounted in a fixture.

2. The testing device according to claim 1,
**characterized in that**
the thrust and pull rod (22) extends from the force cylinder or compressed-air cylinder (16) and at its end is provided with the carrier device (4).

3. The testing device according to claim 1,
**characterized in that**
the movement of the active test object (2) with respect to the object (3) to be inspected is performed vertical or horizontal with respect to gravity.

4. The testing device according to claim 1,
**characterized in that**,
the active test object is designed as a test stamp (2) with a replaceable, at least partially elastic head and a web-like material is arranged between said test stamp and a surface to be inspected and/or an object during testing.

5. The testing device according to claim 4,
**characterized in that**
the web-like material at least partially is made of a textile material and/or has a defined level of roughness.

6. The testing device according to claim 1,
**characterized in that**
the cylinder is provided with at least one heater.

7. The testing device according to claim 1,
**characterized in that**
the testing device is provided with spatially separable units of the moving device for the active test object and the control and/or monitoring device.

8. The testing device according to claim 1, 4 and 5,
**characterized in that**
at least the unit from a retaining device for the object to be inspected, the means for attaching an at least partially textile material as well as the material itself and the device for moving the test stamp against the material to be inspected can be accommodated in a standard climatic chamber.

9. The testing device according to one or more of the preceding claims,
**characterized in that**
the head of the active test object moved against the material to be inspected has a shore hardness in the range of from 40 to 50 at a temperature of -40°C.

10. The testing device according to one or more of the preceding claims,
**characterized in that**
the compressed-air-activated cylinder designed for moving the active test object is connected to a housing or a retaining device or is attached to such a housing or a retaining device by means of an insulating device.

11. The testing device according to one or more of the preceding claims,
**characterized in that**
the connecting lines and/or connections between the moving device for the active test object and the control and/or monitoring device are insulated and/or partially heated.

12. The testing device according to claim 1,
**characterized in that**
the head of the active test object is provided and/or covered with an at least partially textile material.

## Revendications

1. Dispositif de test (1), en particulier pour tester et/ou déterminer la résistance de surfaces ou d'objets à l'abrasion ou la sensibilité aux chocs ou la résistance aux rayures, constitué d'un dispositif de retenue (15) adaptatif ou d'un dispositif d'accès sur l'objet à tester (3) ou une surface à tester, au minimum d'un moyen pour disposer un objet actif de test (2) devant ou au-dessus de l'objet à tester, un dispositif pour déplacer (16) l'objet actif de test qui vient toucher l'objet à tester, ainsi que d'un dispositif de commande et de contrôle (17) pour la commande et le contrôle de la vitesse et de la force avec laquelle l'objet actif de test (2) entre en contact avec l'objet à tester (3),
**caractérisé en ce**
**que** le dispositif de test (1) pour le déplacement de l'objet actif de test (2) sur l'objet à tester (3) est réalisé avec un dispositif de support (4) pour l'objet actif de test, qui peut être chargé d'un poids supplémentaire (18) et qui est équipé d'un vérin de puissance actionné par un fluide ou d'un vérin pneumatique (16) avec une barre de poussée et de traction (22) non circulaire, réalisée de façon à résister à la torsion, qui est commandée par le dispositif de commande et de contrôle (17) ou peut être connectée à un tel dispositif et est montée à son extrémité dans une fixation de manière à pouvoir tourner ou tout au moins être inclinée.

2. Dispositif de test selon la revendication 1,
**caractérisé en ce**
**que** la barre de poussée et de traction (22) part du vérin de puissance ou du vérin pneumatique (16) et est équipée à son extrémité du dispositif de support (4).

3. Dispositif de test selon la revendication 1,
**caractérisé en ce**
**que** le déplacement de l'objet actif de test (2) sur l'objet à tester (3) s'effectue à la perpendiculaire ou l'horizontale de la gravité.

4. Dispositif de test selon la revendication 1,
**caractérisé en ce**
**que** l'objet actif de test est réalisé en tant que poinçon de test (2) avec une tête interchangeable au moins en partie élastique et qu'un matériau en bande est disposé entre ce poinçon de test et une surface à examiner et/ou un objet durant le test.

5. Dispositif de test selon la revendication 4,
**caractérisé en ce**
**que** le matériau en bande est réalisé au moins en partie dans un matériau textile et/ou présente une grandeur définie de rugosité.

6. Dispositif de test selon la revendication 1,
**caractérisé en ce**
**que** le vérin est équipé d'au moins un dispositif de chauffage.

7. Dispositif de test selon la revendication 1,
**caractérisé en ce**
**que** le dispositif de test est équipé d'unités séparables l'une de l'autre dans l'espace, du dispositif de déplacement pour l'objet actif de test et du dispositif de commande et/ou de contrôle.

8. Dispositif de test selon les revendications 1, 4 et 5,
**caractérisé en ce**
**qu'**au moins l'unité constituée d'un dispositif de retenue pour l'objet à tester, du moyen de fixation d'un matériau au moins en partie textile ainsi que du matériau lui-même et du dispositif servant au déplacement du poinçon de test contre le matériau à tester peut être logé dans une chambre climatique standard.

9. Dispositif de test selon une ou plusieurs des revendications précédentes,
**caractérisé en ce**
**que** la tête de l'objet actif de test déplacée contre le matériau à tester possède une dureté Shore dans la plage de 40 à 50 à une température de -40 °C.

10. Dispositif de test selon une ou plusieurs des revendications précédentes,
**caractérisé en ce**
**que** le vérin actionné par air comprimé, réalisé pour le déplacement de l'objet actif de test, est connecté à un boîtier ou à un dispositif de retenue au moyen d'un dispositif d'isolation ou est monté sur un tel boîtier ou dispositif de retenue.

11. Dispositif de test selon une ou plusieurs des revendications précédentes,
**caractérisé en ce**
**que** les lignes de connexion et/ou les connexions entre le dispositif de déplacement pour l'objet actif de test et le dispositif de commande et/ou de contrôle sont réalisées en partie chauffées et/ou de façon isolées.

12. Dispositif de test selon la revendication 1,
**caractérisé en ce**
**que** la tête de l'objet actif de test est équipée et/ou recouverte d'un matériau au moins en partie textile.
